# EUROPEAN PATENT APPLICATION

(11) **EP 2 498 171 A1**
(43) Date of publication of application: **12.09.2012**
(21) Application number: 12157391.9
(22) Date of filing: 28.02.2012
(51) Int. Cl.: G06F 3/033

(54) **Touchpad assembly**

(30) Priority: 11.03.2011 TW 100108255
(71) Applicant: Hon Hai Precision Industry Co., Ltd., New Taipei City (TW)
(72) Inventor: Tsai Chung-Hsuan, Tu-Cheng, New Taipei (TW)
(74) Representative: Gray, John James

(57) **Abstract**

A touch input device (4) includes a touch pad (45) and a switch (4503). The touch pad (45) has opposite sides. On one side of the touch pad extends a connecting part (4523), the connecting part (4523) is flexible and connected to a housing (430). The other side is suspended to act as a floating side(F). The floating side (F) is capable of moving down to enable the switch (4503) to generate input commands when a pressure is exerted on the floating side (F).

## Description

### Field

The present disclosure relates to input devices, and particularly to a touch input device and an electronic device using the touch input device.

### BackGround

Touch input devices, such as touch pads, are a common feature of laptop computers. Two buttons equivalent to a left and a right buttons on a standard mouse are commonly positioned in the front sides or back sides of the touch pad. However, these buttons increases the real estate occupied by the touch input device.

Therefore, there is room for improvement in the art.

### Summary

A touch input device includes a touch pad and a switch. On one side of the touch pad is a connecting part, the connecting part is flexible and connected to the housing of a host device. The side opposite to the one side with the connecting part is suspended to act as a floating side. The floating side is capable of moving down to enable the switch to generate input commands when a pressure is exerted on the floating side.

### BRIEF DESCRIPTION OF THE DRAWINGS

The components of the drawings are not necessarily drawn to scale, the emphasis instead being placed upon clearly illustrating the principles of the embodiments of an electronic device. Moreover, in the drawings, like reference numerals designate corresponding parts throughout two views.

FIG. 1 is an isometric view of an electronic device with a touch input device.

FIG. 2 is a bottom view of the touch input device in FIG. 1.

FIG. 3 is exploded view of touch input device in FIG. 2.

FIG. 4 is a cross-sectional view taken along the line IV-IV of FIG .1.

### DETAILED DESCRIPTION

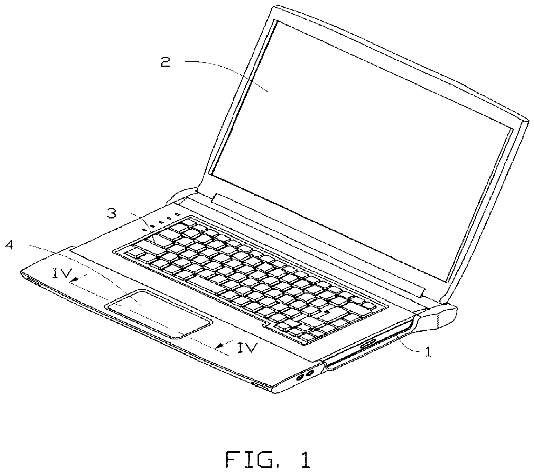

FIG. 1 shows an electronic apparatus including a main body 1, and a cover 2 rotatably coupled to the main body 1. A keyboard 3 and a touch input device 4 both are positioned on the main body 1. The cover 2 is coupled to the backside of the main body 1, the touch input device 4 is adjacent to the front side of the main body1, and opposite to the backside. The keyboard 3 is positioned between the backside and the touch input device 4.

The electronic apparatus may be a notebook computer, an electronic book, a PDA, for example. In this embodiment, the notebook computer is used as an example, and the main body 1 houses the motherboard and other components of the notebook computer, and the cover 2 is the display of the notebook computer.

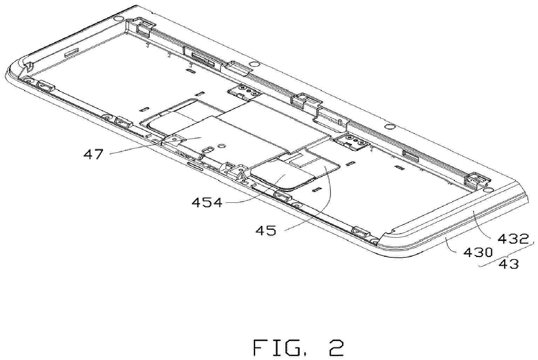

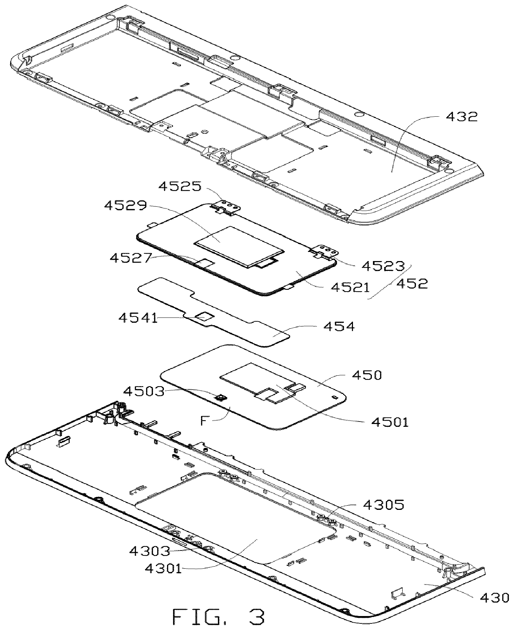

In FIGs. 2-3, the touch input device 4 includes a frame 43, a touch pad 45, a supporting member 452, an enhancing member 454, and an actuating member 47. The frame 43 includes an upper housing 430 facing the cover 2, and a lower housing 432 coupled to the upper housing 430 and away from the cover 2. The upper housing 430 defines a first opening 4301, and sets a plurality of first fixing posts 4303 and a plurality of second fixing posts 4305. The plurality of the first fixing posts 4303 and the plurality of the second fixing posts 4305 are integrally formed on the upper housing 430. The first fixing posts 4303 are arranged around the edge of the upper housing 430. The second fixing posts 4305 are positioned beside one side of the first opening 4301 and adjacent to the keyboard 3.

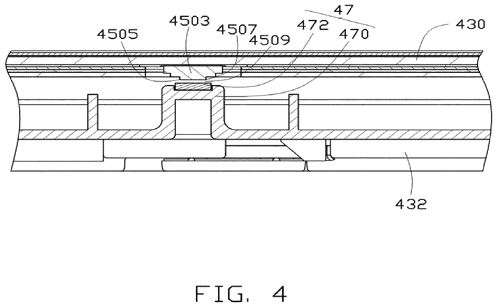

The top surface of the touch pad 45 extends out of the frame 43 via the first opening 4301 so a user can touch it with fingers or a stylus, where the touch pad 45 can translate the touches on the top surface into input commands. The bottom surface of the touch pad 45 sits a circuit board 4501 and a switch 4503. The circuit board 4501 is positioned on the middle of the touch pad 45. The switch 4503 is positioned on one end of the circuit board 4501 and away from the keyboard 3. The switch 4503 includes a first touch point 4505 (FIG. 4) and a second touch point 4507 positioned on two opposite sides of the switch 4503. The two opposite sides of the switch 4503 are located on the left and right side of the touch pad 45. The switch 4503 acts as click buttons of a mouse (not shown) by activating the first touch point 4505 or the second touch point 4507.

The supporting member 452 is made of metal. The supporting member 452 includes a rectangular main board 4521, and two connecting parts 4523 protruding from one edge of the main board 4521 and being adjacent to two opposite sides of the main board 4521. The main board 4521 defines a gap 4527 and an opening 4529. The gap 4527 is positioned on the other edge of the main body 4521 and opposite to the connecting parts 4523. The opening 4520 is positioned on the middle of the main board 4521. The main board 4521 is attached to the touch pad 45 so the switch 4503 and the circuit board 4501 are capable of protruding out of the main board 4521 from the gap 4527 and the opening 4520 respectively.

The connecting parts 4523 can be flexible. Each connecting part 4523 perpendicularly extends downward from the bottom surface of the main board 4521, and then bends out of the main board 4521 along a direction parallel to the main board 4521. The connecting part 4523 defines a plurality of fixing holes 4525 according to the second fixing posts 4305. The plurality of fixing holes 4525 are positioned on one end of the connected part 4523 and away from the main board 4521. A plurality of screws (not shown) are passed through the plurality of fixing holes 4525 and screwed in the second fixing posts 4305 to enable the supporting member 452 to fix on the upper housing 430. Thus the one edge of the supporting member 452 is secured to the frame 43, and the opposite edge of the supporting member 452 is not secured to the frame. Since the first securing part 4527 is flexible, the touch pad 45 can be supported by the supporting member 452, and a side of the touch pad 45 corresponding to the free edge of the supporting member 452 can be moved up and down. In other words, the side of the touch pad 45 corresponding to the edge of the supporting member 452 not secured to the frame acts as a floating side F which is permitted to move when a force is exerted on it.

The enhancing member 454 is attached to the free side of the supporting member 452 and positioned between the touch pad 45 and the supporting member 452. The enhancing member 454 is capable of preventing the supporting member 452 from being distorted after a plurality of operations being performed on the touch pad 45. The enhancing member 454 defines a second opening 4541 to enable the switch 4503 to protrude.

Referring to FIG. 4, an actuating member 47 is positioned on the lower housing 432 and faces the switch 4503. A space 4509 is formed between the switch 4503 and the actuating member 47. The actuating member 47 includes a protrusion 470 positioned on the middle of the actuating member 47, and an elastic actuator 472 positioned on the top of the protrusion 470. The elastic actuator 472 faces the switch 4503 for actuating the switch 4503. The elastic actuator 472 is made of rubber, thus noise will be reduced when the switch 4503 touches or impacts the elastic actuator 472.

In operation, a user presses the left or the right ends of the floating side F of the touch pad 45. The connecting part 4523 is distorted, and the left or the right ends of the floating side F of the touch pad 45 are pressed down, and the first touch point 4505 or the second touch point 4507 contacts with the elastic actuator 472. At this time, the first touch point 4505 or the second touch point 4507 is actuated to enable the circuit board 4501 to generate the commands in response to the operation from the user. When the pressure on the touch pad 45 is released, the connecting part 4523 enables the touch pad 45 to return to the original state, the first touch point 4505 or the second touch point 4507 is detached from the protrusion 470, at this point, one operation for inputting the commands ends.

Moreover, in another embodiment, two switches each with one touched point can replace the switch 4503. The actuating member 47 defines two protrusions. The two switches are positioned on the bottom surface of the touch pad 45 at intervals, and the two elastic actuators are in concert with the two touch switches respectively.

It is to be understood, however, that even though relevant information and the advantages of the present embodiments have been set forth in the foregoing description, together with details of the functions of the present embodiments, the disclosure is illustrative only; and changes may be made in detail, especially in the matters of shape, size, and arrangement of parts within the principles of the present embodiments to the full extent indicated by the broad general meaning of the terms in which the appended claims are expressed.

## Claims

1. A touch input device comprising:
a touch pad having opposite sides, a connecting part extending from one side of the touch pad, the connecting part being flexible and connected to a housing which the touch input device is applied to, the other side of the touch pad being suspended to act as a floating side; and
a switch;
wherein the floating side is capable of moving down to enable the switch to generate input commands when a pressure is exerted on the floating side.

2. The touch input device of claim 1, wherein the switch is positioned on the touch pad.

3. The touch input device of claim 2, further comprising an actuating member, the actuating member being positioned below the touch pad, and coming into contact with the switch to actuate the switch when the touch pad is moved down.

4. The touch input device of claim 3, wherein there is a space between the actuating member and the switch, the switch comprises at least one touch point to actuate the switch.

5. The touch input device of claim 4, wherein the actuating member comprises a protrusion, and an elastic actuator positioned on the top of the protrusion.

6. The touch input device of claim 1, further comprising a supporting member attached to the touch pad, the connecting part extending from one edge of the supporting member.

7. The touch input device of claim 6, further comprising an enhancing member attached to the supporting member.

8. An electronic device comprising:
a housing defining an opening;
a touch pad mounted to the housing, and the upper surface of the touch pad protruding out of the housing via the opening, the touch pad comprising :
a fixing side extending a connecting part, the connecting part being flexible and
secured to the housing;
a floating side opposite to the fixing side; and
a switch;
wherein the floating side is capable of operably being moved down to enable the switch to generate input commands.

9. The electronic device of claim 8, wherein there is a space between the actuating member and the switch, the switch comprises at least one touch point to actuate the switch.

10. The electronic device of claim 9, wherein the actuating member comprises a protrusion, and an elastic actuator positioned on the top of the protrusion.

11. The electronic device of claim 8, further comprising a supporting member attached to the touch pad, the connecting part extending from one edge of the supporting member.

12. The electronic device of claim 11, further comprising an enhancing member attached to the supporting member.
